# EUROPÄISCHE PATENTSCHRIFT

(11) **EP 4 428 583 B1**
(45) Veröffentlichungstag und Bekanntmachung des Hinweises auf die Patenterteilung: **29.07.2026**
(21) Anmeldenummer: 23160679.9
(22) Anmeldetag: 08.03.2023
(51) Int. Cl.: G01V 8/12, G01V 8/14, G01V 8/20, G01V 8/22, F16P 3/14, G05B 9/02, G08B 13/183, G08B 13/184

(54) **OPTISCHER SENSOR**
OPTICAL SENSOR
CAPTEUR OPTIQUE

(43) Veröffentlichungstag der Anmeldung: 11.09.2024
(73) Patentinhaber: Leuze electronic GmbH + Co. KG, 73277 Owen/Teck (DE)
(72) Erfinder: Heckmayr, Alexander, 86807 Buchloe (DE); Koperski, Joachim, 85521 Ottobrunn (DE); Tkach, Gennady, 81373 München (DE); Feller, Bernhard, 86316 Friedberg (DE); Perchermeier, Dr., Julian, 80637 München (DE)
(74) Vertreter: Ruckh, Rainer Gerhard

(56) Entgegenhaltungen:
- DE-A1- 102008 050 943
- DE-A1- 102016 210 984
- DE-U1- 202021 100 816

## Beschreibung

Die Erfindung betrifft einen optischen Sensor und ein Verfahren zum Betrieb eines optischen Sensors.

Derartige optische Sensoren dienen generell zur Erfassung von Objekten in einem Überwachungsbereich. Beispielsweise kann ein derartiger optischer Sensor als Lichtvorhang ausgebildet sein.

Ein derartiger Lichtvorhang ist beispielsweise aus der DE 10 2008 050 943 A1 vorbekannt. Der Lichtvorhang dient zur Überwachung von Objekten in einem Überwachungsbereich. Insbesondere ist der Lichtvorhang als Sicherheits-Lichtvorhang ausgebildet, der im Bereich der Sicherheitstechnik zur Überwachung von Gefahrenbereichen eingesetzt wird. Der Lichtvorhang umfasst eine Anordnung von Sendern, die im Gehäuse einer Sendereinheit untergebracht sind. Weiterhin ist eine Anordnung von Empfängern vorgesehen, die in einem Gehäuse einer Empfängereinheit untergebracht sind. Die Sender- und Empfängereinheiten sind an gegenüberliegenden Rändern des Überwachungsbereichs angeordnet. Bei freiem Überwachungsbereich sind die von einem Sender emittierten Lichtstrahlen auf einen zugeordneten Empfänger geführt. Der Sender und der zugeordnete Empfänger bilden eine Strahlachse. Zur Objektdetektion werden in der Auswerteeinheit die Empfangssignale der Empfänger ausgewertet und in Abhängigkeit hiervon als Objektfeststellungssignal ein binäres Schaltsignal generiert, dessen Schaltzustände angeben, ob sich ein Objekt im Überwachungsbereich befindet oder nicht. Ein Objekteingriff liegt vor, wenn wenigstens eine Strahlachse durch ein Objekt unterbrochen ist.

Für einen Einsatz in sicherheitsrelevanten Applikationen muss der optische Sensor die hierfür geltenden normativen Anforderungen erfüllen, d.h. der optische Sensor muss ein gefordertes Sicherheitsniveau erfüllen und hierzu einen entsprechenden fehlersicheren Aufbau aufweisen.

Dies wird üblicherweise dadurch erreicht, dass die Auswerteeinheit des optischen Sensors zwei unabhängige Prozessoren aufweist, die sich zyklisch selbst und gegenseitig testen und überwachen. Ein derartiges Sicherheitskonzept ist, insbesondere durch die zyklische Testung der Prozessoren, unerwünscht aufwändig. Zudem weisen die Prozessoren CPUs und Speichereinheiten wie RAM und/oder Flashs auf, so dass diese in der redundanten Rechnerstruktur doppelt vorhanden sind, was einen unerwünscht großen Hardwareaufwand bedeutet.

Die DE 20 2021 100 816 U1 betrifft eine optoelektronische Sicherheitsvorrichtung mit einem Lichtsender zur Aussendung von Sendelichtstrahlen in einen Überwachungsbereich, einem Lichtempfänger zur Erzeugung von Empfangssignalen aus empfangenen Empfangslichtstrahlen, die von Reflexionen der Sendelichtstrahlen an wenigstens einem Objekt im Überwachungsbereich stammen, einer Auswerteeinheit zur Auswertung der Empfangssignale und zum Ausgeben eines Sicherheitssignals in Abhängigkeit der Empfangssignale. Die Auswerteeinheit weist einen Mehrkernprozessor mit wenigstens zwei CPUs auf, wobei der Mehrkernprozessor kein dedizierter Sicherheitsbaustein ist und die Auswertung redundant auf beiden CPUs des Mehrkernprozessors erfolgt. Die Auswerteeinheit weist einen Watchdog Controller auf, der die Funktion des Mehrkernprozessors überwacht, wobei der Watchdog Controller unabhängig vom Mehrkernprozessor die Auswerteeinheit veranlassen kann, das Sicherheitssignal auszugeben.

In der DE 10 2016 210 984 A1 wird ein Verfahren zum Betreiben eines Steuergeräts eines Kraftfahrzeugs beschrieben. Eine Zustandsanfrage wird mittels einer Watchdog-Einheit an eine erste Kontrolleinheit, welche auf einem ersten Rechenkern eines Mehrkernprozessors ausgeführt wird, übermittelt. Eine Zustandsantwort wird mittels der ersten Kontrolleinheit in Abhängigkeit von der Zustandsanfrage ermittelt. Ein Fehler wird mittels der Watchdog-Einheit in Abhängigkeit von der Zustandsantwort ermittelt.

Die DE 10 2008 050 943 A1 betrifft einen optischen Sensor zur Erfassung von Objekten innerhalb eines Schutzfelds. Der optische Sensor umfasst einen Lichtstrahlen emittierenden Sender und einen Lichtstrahlen empfangenden Empfänger. Mittels der Lichtstrahlen wird das Schutzfeld überwacht. Der optische Sensor umfasst eine Auswerteeinheit, in welcher die Empfangssignale des wenigstens einen Empfängers ausgewertet und eine Objektmeldung generiert wird, wenn ein Objekt in das Schutzfeld eindringt. Erfindungsgemäß sind Mittel zur Erfassung der Bewegungsrichtungen von Objekten vorgesehen. Die Parametrierung und/oder der Betriebszustand des optischen Sensors ist in Abhängigkeit der Bewegungsrichtungen von Objekten vorgebbar.

Der Erfindung liegt die Aufgabe zugrunde einen optischen Sensor der eingangs genannten Art bereitzustellen, welche mit geringem konstruktiven Aufwand in sicherheitstechnischen Applikationen eingesetzt werden kann.

Zur Lösung dieser Aufgabe sind die Merkmale der unabhängigen Ansprüche 1 und 15 vorgesehen. Vorteilhafte Ausführungsformen und zweckmäßige Weiterbildungen der Erfindung sind in den abhängigen Ansprüchen beschrieben.

Die Erfindung betrifft ein Verfahren zum Betrieb eines optischen Sensors zur Erfassung von Objekten in einem Überwachungsbereich mit wenigstens einem Lichtstrahlen emittierenden Sender, mit wenigstens einem Lichtstrahlen empfangenden Empfänger. In einer Auswerteeinheit werden Empfangssignale des Empfängers fehlersicher ausgewertet. In Abhängigkeit dieser Auswertung wird ein sicheres Ausgangssignal in Form eines Objektfeststellungssignals generiert und über eine Schnittstelle ausgegeben. Die Auswerteeinheit weist einen Mehrkernprozessor mit wenigstens zwei Rechenkernen auf, wobei die Empfangssignale des Empfängers den Rechenkernen zugeführt und dort redundant ausgewertet werden. Die Auswerteeinheit weist einen Watchdog-Controller auf, mittels dessen Funktionen des Mehrkernprozessors überwacht werden. Eine redundante Anordnung von sicherheitsgerichteten Schnittstellenmodulen ist vorhanden, über welche das Objektfeststellungssignal an eine externe Einheit ausgebbar ist. Zwei Schnittstellenmodule sind vorhanden, wobei jeweils ein Schnittstellenmodul ist mit einem Rechenkern verbunden ist.

Der erfindungsgemäße optische Sensor kann als Lichtvorhang ausgebildet sein. Der Lichtvorhang weist eine Anordnung von Sendern auf, die vorteilhaft in einer Sendereinheit integriert sind. Weiterhin weist der Lichtvorhang vorteilhaft eine Empfängereinheit auf, in der eine Anordnung von Empfängern angeordnet sind. Die Sendereinheit und die Empfängereinheit sind an gegenüberliegenden Rändern des Überwachungsbereichs angeordnet. Jedem Sender ist vorteilhaft ein Empfänger zur Ausbildung einer Strahlachse so zugeordnet, dass bei freiem Überwachungsbereich die Lichtstrahlen eines Senders ungehindert zu dem zugeordneten Empfänger der jeweiligen Strahlachse geführt sind. Objekte im Überwachungsbereich werden dadurch erkannt, dass zumindest die Lichtstrahlen einer Strahlachse unterbrochen werden.

Prinzipiell kann der optische Sensor auch als Reflexions-Lichtvorhang ausgebildet sein. Dann sind die Sender und Empfänger in einer gemeinsamen Sender-/ Empfängereinheit untergebracht, die an einem Rand des Überwachungsbereichs angeordnet ist. Am anderen Rand des Überwachungsbereichs befindet sich ein Reflektor als weiterer Bestandteil des Lichtvorhangs. Bei freiem Überwachungsbereich werden die Lichtstrahlen jedes Senders zum Reflektor geführt und von dort zurück zum zugeordneten Empfänger reflektiert.

Weiterhin kann der optische Sensor als Lichtschranke oder Reflexions-Lichtschranke ausgebildet sein. Diese optischen Sensoren weisen nur einen Sender und einen Empfänger auf.

Der optische Sensor bildet einen Sicherheitssensor aus, mit welchem beispielsweise ein Gefahrenbereich an einer Anlage überwacht wird. Nur wenn der optische Sensor als Ausgangssignal ein Objektfeststellungssignal generiert, das einen freien Gefahrenbereich meldet, wird der Betrieb der Anlage freigegeben.

Bei dem erfindungsgemäßen optischen Sensor wird eine konstruktiv einfache Sicherheitsstruktur bereitgestellt, mit der die normativen Anforderungen für einen Einsatz im Bereich der Sicherheitstechnik erfüllt werden.

Der Mehrkernprozessor der Auswerteeinheit weist mehrere Rechenkerne auf, in welchen die Empfangssignale der Empfängereinheit direkt, d.h. ohne Einsatz weiterer Prozessoren eingelesen werden, wobei in diesen Rechenkernen eine Auswertung der Empfangssignale durchgeführt wird, um als Ausgangssignal das Objektfeststellungssignal zu generieren. Durch den fehlersicheren Aufbau der Auswerteeinheit generiert diese sichere, d.h. fehlersichere Ausgangssignale.

Wesentlich hierbei ist, dass der Mehrkernprozessor kein Sicherheitsbaustein ist, bzw. sein muss, d.h. der Mehrkernprozessor mit seinen Rechenkernen weist für sich alleine keinen fehlersicheren Aufbau auf. Die Rechenkerne des Mehrkernprozessors können damit einen einfachen Aufbau aufweisen. Auch eine gegenseitige zyklische Überprüfung der Rechenkerne ist nicht notwendig.

Das für den Einsatz in der Sicherheitstechnik erforderliche Sicherheitsniveau wird mit Hilfe des Watchdog-Controllers erreicht, der die Rechenkerne des Mehrkernprozessors überwacht.

Vorteilhaft führt der Watchdog-Controller Tests zur Überprüfung der Rechenkerne des Mehrkernprozessors durch.

Insbesondere umfassen die Tests einen Uhrenvergleich, einen Aktivitätstest, das Generieren von Aufgaben für Rechenkerne und das Kontrollieren entsprechender Aufgabenergebnisse, sowie das Überwachen von Spannungen.

Weiterhin initiiert der Watchdog-Controller Selbsttests der Rechenkerne des Mehrkernprozessors.

Dadurch ist eine umfangreiche Prüfung der Rechenkerne des Mehrkernprozessors gewährleistet, wobei mit dieser Prüfung Fehler in den Rechenkernen aufgedeckt werden können.

Generell kann bei Aufdeckung von Fehlern im Mehrkernprozessor eine Störmeldung generiert werden. Vorteilhaft wird im Fehlerfall der optische Sensor auch stillgesetzt oder in einen sicheren Zustand überführt, in dem der optische Sensor ein entsprechendes Sicherheitssignal ausgibt.

Gemäß einer konstruktiv vorteilhaften Variante ist der Mehrkernprozessor als Teil eines SoC (System on a Chip) ausgebildet, und der Watchdog-Controller ist nicht Bestandteil des SoC (System on a Chip).

Der Watchdog-Controller und der Mehrkernprozessor bilden somit separate Hardware-Einheiten.

Zweckmäßig sind der Mehrkernprozessor und der Watchdog-Controller in unterschiedlichen Gehäusen integriert.

Dadurch wird eine räumliche Trennung des Watchdog-Controllers und des Mehrkernprozessors erzielt.

Gemäß einer alternativen konstruktiven Variante ist der Watchdog-Controller von einem Rechenkern des Mehrkernprozessors gebildet.

In diesem Fall ist der Watchdog-Controller Bestandteil des Mehrkernprozessors, wodurch ein besonders kompakter Aufbau der Auswerteeinheit des optischen Sensors erhalten wird.

Generell können die Rechenkerne in Form von CPUs oder DSPs gebildet sein.

Vorteilhaft kommuniziert der Watchdog-Controller mit den Rechenkernen des Mehrkernprozessors über serielle Interfaces oder parallele Inferfaces.

Das serielle Interface kann z.B. von einem Bus gebildet sein. Das parallele Interface kann auch von einem Bussystem gebildet sein. Über das Bussystem ist generell eine Triggerung des Watchdog-Controllers möglich, insbesondere um Tests der Rechenkerne zu initiieren.

Gemäß einer besonders vorteilhaften Ausführungsform wird mittels des Watchdog-Controllers die Ausgabe der Ausgangssignale, d.h. der Objektfeststellungssignale gesteuert.

Dabei kann der Watchdog-Controller als Kriterium für die fehlerfreie Funktion der Rechenkerne prüfen, ob diese dieselben Ausgangssignale generieren und diese nur dann an eine externe Einheit ausgeben.

Vorteilhaft steuert der Watchdog-Controller die Ausgabe des Objektfeststellungssignals.

Besonders vorteilhaft bildet der Watchdog-Controller mit einem oder beiden Rechenkernen einen logischen Kanal zur Ausgabe von Ausgangssignalen. Bei Auftreten von Fehlern wird die Ausgabe der Ausgangssignale unterbunden oder es wird ein Ausgangssignal generiert, mit dem eine externe Einheit, wie z.B. eine Steuerung einer mit dem optischen Sensor überwachten Anlage, in den sicheren Zustand überführt wird.

Im einfachsten Fall überwacht der Watchdog-Controller nur einen Rechenkern und dient gleichzeitig als logischer Ausgabekanal zur Ausgabe der Ausgangssignale.

Besonders vorteilhaft bildet der Watchdog-Controller mit beiden Rechenkernen oder wenigstens zwei Rechenkernen einen logischen Kanal, über welchen die Ausgabe von Ausgangssignalen erfolgt, wobei dann eine mehrkanalige Ausgangsstruktur realisiert ist.

Erfindungsgemäß ist eine redundante Anordnung von sicherheitsgerichteten Schnittstellenmodulen vorhanden, über welche Ausgangssignale an eine externe Einheit ausgebbar sind.

Dabei sind zwei Schnittstellenmodule vorhanden, wobei jeweils ein Schnittstellenmodul mit einem Rechenkern verbunden ist.

Die redundanten Schnittstellenmodule sind somit an die redundante Struktur des Mehrkernprozessors angepasst, wobei vorteilhaft immer ein Rechenkern ein Schnittstellenmodul ansteuert.

Ein sicherheitsgerichtetes Schnittstellenmodul ist ein fehlersicheres bzw. auf Fehler geprüftes Schnittstellenmodul. Beispielsweise können über ein derartiges Schnittstellenmodul ausgelesene Daten in den zugeordneten Rechenkern rückgelesen werden, um so zu prüfen, ob das Schnittstellenmodul fehlerfrei arbeitet.

Weiterhin können über derartige Schnittstellenmodule mit Prüfsummen oder dergleichen übertragene Daten gesichert werden.

Gemäß einer vorteilhaften Weiterbildung der Erfindung weist der Mehrkernprozessor mehr als zwei Rechenkerne auf. In zwei Rechenkernen werden die Ausgangssignale, d.h. Objektfeststellungssignale generiert. Der oder die weiteren Rechenkerne steuern und/oder kontrollieren die Kommunikation mit einer externen Einheit.

Der Mehrkernprozessor mit seinen Rechenkernen weist dann eine arbeitsteilige Struktur derart auf, dass ein Teil der Rechenkerne, vorzugsweise zwei Rechenkerne ausschließlich die Auswertung der Empfangssignale übernehmen. Diese Rechenkerne arbeiten dann unbeeinflusst von weiteren Rechenkernen, die die Kommunikation mit externen Einheiten steuern und kontrollieren.

Damit wird eine erhöhte Cybersicherheit erzielt, in dem die für die externe Kommunikation zuständigen Rechenkerne Manipulationen von außen aufdecken und verhindern können. Die für die Auswertung der Empfangssignale zuständigen Rechenkerne sind damit vor externen Manipulationen geschützt.

Die Anmeldung wird im Folgenden anhand der Zeichnungen erläutert. Es zeigen:
- Figur 1:: Schematische Darstellung eines Ausführungsbeispiels des erfindungsgemäßen optischen Sensors in Form eines Lichtvorhangs.
- Figur 2:: Schematische Darstellung eines Ausführungsbeispiels des erfindungsgemäßen optischen Sensors in Form eines Reflexions-Lichtvorhangs.
- Figur 3:: Ausführungsbeispiel der Auswerteeinheit des erfindungsgemäßen optischen Sensors.

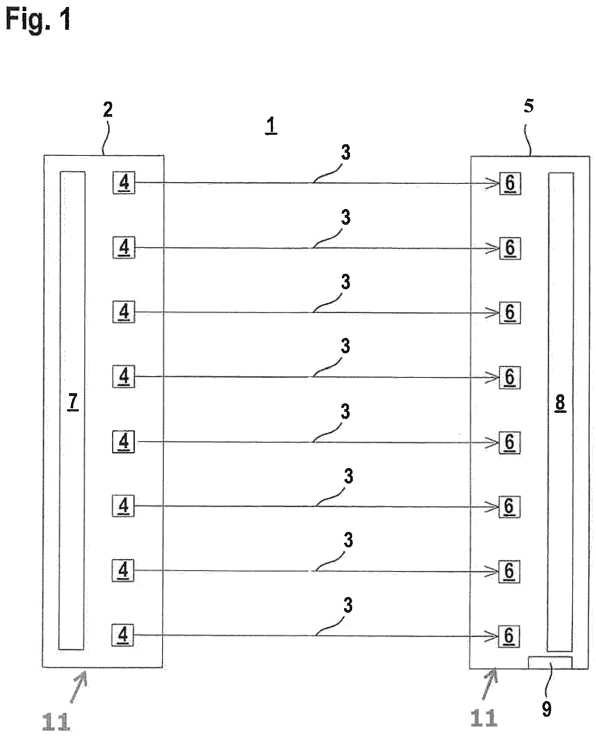

Figur 1 zeigt den prinzipiellen Aufbau des erfindungsgemäßen optischen Sensors in Form eines Lichtvorhangs 1. Der Lichtvorhang 1 umfasst eine Sendereinheit 2, in deren Gehäuse 11 eine Reihenanordnung von Lichtstrahlen 3 emittierenden Sendern 4 in Form von Sendedioden angeordnet ist. Die Sendedioden sind von Leuchtdioden oder dergleichen gebildet. Der Lichtvorhang 1 weist weiterhin eine Empfängereinheit 5 auf, in deren Gehäuse 11 eine Reihenanordnung von Lichtstrahlen 3 empfangenden Empfängern 6 in Form von Empfangsdioden vorgesehen ist. Die Empfangsdioden sind von Foto-PIN-Dioden oder Foto-Dioden gebildet. Alternativ können auch Foto-Transistoren eingesetzt werden.

Die Sendereinheit 2 und die Empfängereinheit 5 sind an gegenüberliegenden Rändern eines Überwachungsbereichs angeordnet. Bei freiem Überwachungsbereich treffen die von jeweils einem Sender 4 emittierten Lichtstrahlen 3 auf einen zugeordneten, gegenüberliegenden Empfänger 6. Ein Sender 4 und der hierzu zugeordnete Empfänger 6 bilden jeweils eine Strahlachse. Der Senderbetrieb wird durch eine Steuereinheit 7 in der Sendereinheit 2 gesteuert und bewertet. Der Empfängerbetrieb wird durch eine Auswerteeinheit 8 in der Empfängereinheit 5 gesteuert. Die Sender 4 und Empfänger 6 der einzelnen Strahlachsen werden durch eine optische Synchronisierung des Lichtvorhangs 1 zyklisch einzeln oder zu mehreren nacheinander aktiviert. Mit den parallel verlaufenden Lichtstrahlen 3 der Strahlachsen wird ein in einer Ebene verlaufendes Schutzfeld überwacht.

In der Auswerteeinheit 8 werden hierzu die Empfangssignale der Empfänger 6 ausgewertet, um als Objektfeststellungssignal ein binäres Schaltsignal zu erzeugen. Der erste Schaltzustand entspricht einer Objektmeldung, der zweite Schaltzustand einem freien Schutzfeld.

Der optische Sensor allgemein, bzw. spezifisch der Lichtvorhang 1 bildet einen Sicherheitssensor für den Einsatz im Bereich der Sicherheitstechnik. Hierzu weist der Lichtvorhang 1 einen fehlersicheren Aufbau auf. Insbesondere weist die Auswerteeinheit 8 einen mehrkanaligen, redundanten Aufbau auf, beispielsweise in Form zweier sich zyklisch überwachender Rechnereinheiten.

Der optische Sensor, d.h. der Lichtvorhang 1 kann dann in sicherheitstechnischen Applikationen eingesetzt werden. Insbesondere wird der optische Sensor zur Gefahrenbereichsüberwachung an einer Anlage eingesetzt. Das im optischen Sensor, d.h. Lichtvorhang 1 generierte Objektfeststellungssignal wird als Ausgangssignal über eine Ausgangsstruktur 9 an die Steuerung der Anlage ausgegeben. Der Betrieb der Anlage wird nur dann freigegeben, wenn das Objektfeststellungssignal einen freien Gefahrenbereich meldet.

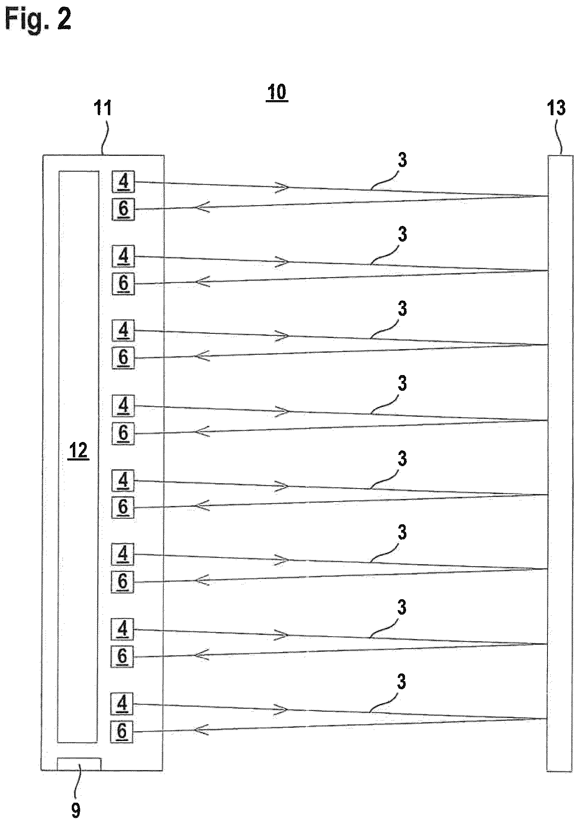

Figur 2 zeigt eine Ausführungsform eines optischen Sensors in Form eines Reflexions-Lichtvorhangs 10. Der Reflexions-Lichtvorhang 10 unterscheidet sich vom Lichtvorhang 1 gemäß Figur 1 dadurch, dass die Sender 4 und Empfänger 6 in einem gemeinsamen Gehäuse 11 integriert sind und von einer Steuer- und Auswerteeinheit 12 gesteuert werden, die die Funktionen der Auswerteeinheit 8 und der Steuereinheit 7 des Lichtvorhangs 1 übernehmen. Bei freiem Überwachungsbereich treffen die Lichtstrahlen 3 der Sender 4 auf einen Reflektor 13 und werden zu dem zugeordneten Empfänger 6 reflektiert.

Generell kann der optische Sensor auch als Lichtschranke ausgebildet sein. Dann weist die Anordnung gemäß Figur 1 nur einen Sender 4 und einen Empfänger 6 auf.

Weiterhin kann der optische Sensor auch als Reflexions-Lichtschranke 10 ausgebildet sein. Dann weist die Anordnung gemäß Figur 2 nur einen Sender 4 und einen Empfänger 6 auf.

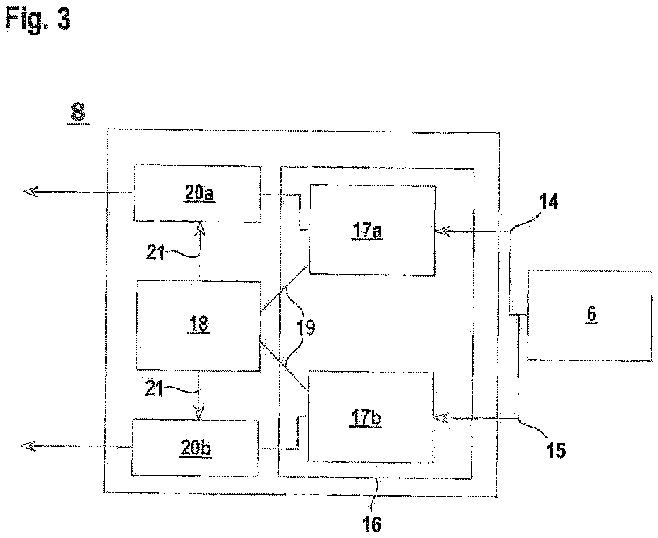

Figur 3 zeigt ein Ausführungsbeispiel der Auswerteeinheit 8 des erfindungsgemäßen optischen Sensors 1.

Die Auswerteeinheit 8 bildet eine Sicherheitsfunktion aus, durch welche der optische Sensor 1 im Bereich sicherheitstechnischer Applikationen eingesetzt werden kann.

Empfangssignale, die in dem oder den Empfängern 6 generiert werden, werden über Leitungen 14, 15 der Auswerteeinheit 8 zugeführt. Der Einfachheit halber ist in Figur 3 nur ein Empfänger 6 dargestellt.

Die Auswerteeinheit 8 weist einen Mehrkernprozessor 16 mit mehreren Rechenkernen 17a, 17b auf. Im vorliegenden Fall sind zwei Rechenkerne 17a, 17b vorhanden, wobei jeder Rechenkern 17a, 17b in Form einer CPU ausgebildet ist. Alternativ können die Rechenkerne 17a, 17b in Form von DSPs ausgebildet sein.

Der Mehrkernprozessor 16 ist vorteilhaft Bestandteil eines SoC (System On a Chip).

Die Empfangssignale der Empfänger 6 werden über die Leitungen 14, 15 beiden Rechenkernen 17a, 17b des Mehrkernprozessors 16 zugeführt.

Der Mehrkernprozessor 16 ist kein Sicherheitsbaustein, d.h. die Rechenkerne 17a, 17b weisen keinen fehlersicheren Aufbau auf.

Das für den Einsatz im Bereich der Sicherheitstechnik erforderliche Sicherheitsniveau, d.h. die erforderliche Fehlersicherheit der Auswerteeinheit 8, wird durch einen dem Mehrkernprozessor 16 zugeordneten Watchdog-Controller 18 erzielt, der die beiden Rechenkerne 17a, 17b überwacht.

Im vorliegenden Fall ist der Watchdog-Controller 18 nicht Bestandteil des Mehrkernprozessors 16.

Insbesondere kann der Mehrkernprozessor 16 und der Watchdog-Controller 18 in unterschiedlichen Gehäusen 11 integriert sein.

Alternativ kann der Watchdog-Controller 18 von einem Rechenkern des Mehrkernprozessors 16 gebildet sein.

Der Watchdog-Controller 18 ist über ein Interface 19 mit den Rechenkernen 17a, 17b verbunden, wobei das Interface 19 ein serielles oder paralleles Interface sein kann. Der Watchdog-Controller 18 kommuniziert mit den Rechenkernen 17a, 17b über die Interfaces 19.

An jeden der Rechenkerne 17a, 17b ist ein Schnittstellenmodul 20a, 20b, die die Ausgangsstruktur 9 des optischen Sensors bilden, angeschlossen.

Die Schnittstellenmodule 20a, 20b sind als sicherheitsgerichtete Schnittstellenmodule 20a, 20b ausgebildet. Die Schnittstellenmodule 20a, 20b sind über Steuerleitungen 21 mit dem Watchdog-Controller 18 verbunden.

Bei der Anordnung gemäß Figur 3 führt der Watchdog-Controller 18 Tests zur Überprüfung der Rechenkerne 17a, 17b des Mehrkernprozessors 16 durch.

Dabei umfassen die Tests einen Uhrenvergleich, einen Aktivitätstest, das Generieren von Aufgaben für Rechenkerne 17a, 17b und das Kontrollieren entsprechender Aufgabenergebnisse, sowie das Überwachen von Spannungen.

Weiterhin initiiert der Watchdog-Controller 18 Selbsttests der Rechenkerne 17a, 17b des Mehrkernprozessors 16.

Weiterhin wird mittels des Watchdog-Controllers 18 die Ausgabe von Objektfeststellungssignalen oder daraus abgeleitete Daten beeinflusst.

Im vorliegenden Fall bildet der Watchdog-Controller 18 durch die abwechselnde Zuschaltung zu den Rechenkernen 17a, 17b mit jedem Rechenkern 17a, 17b einen logischen Kanal zur Ausgabe der Objektfeststellungssignale.

Der Watchdog-Controller 18 steuert und kontrolliert dabei die zweikanalige Ausgabe der Ausgangssignale, d.h. Objektfeststellungssignale über die Schnittstellenmodule 20a, 20b.

### Bezugszeichenliste

- (1): Lichtvorhang
- (2): Sendereinheit
- (3): Lichtstrahl
- (4): Sender
- (5): Empfängereinheit
- (6): Empfänger
- (7): Steuereinheit
- (8): Auswerteeinheit
- (9): Ausgangsstruktur
- (10): Reflexions-Lichtvorhang
- (11): Gehäuse
- (12): Steuer- und Auswerteeinheit
- (13): Reflektor
- (14): Leitung
- (15): Leitung
- (16): Mehrkernprozessor
- (17a): Rechenkern
- (17b): Rechenkern
- (18): Watchdog-Controller
- (19): Interface
- (20a): Schnittstellenmodul
- (20b): Schnittstellenmodul
- (21): Steuerleitung

## Patentansprüche

1. Optischer Sensor zur Erfassung von Objekten in einem Überwachungsbereich mit wenigstens einem Lichtstrahlen (3) emittierenden Sender (4), mit wenigstens einem Lichtstrahlen (3) empfangenden Empfänger (6), und mit einer Auswerteeinheit (8), welche ausgebildet ist, Empfangssignale des Empfängers (6) fehlersicher auszuwerten und in Abhängigkeit dieser Auswertung ein sicheres Ausgangssignal in Form eines Objektfeststellungssignals zu generieren und über eine Schnittstelle auszugeben, wobei die Auswerteeinheit (8) einen Mehrkernprozessor (16) mit wenigstens zwei Rechenkernen (17a, 17b) aufweist, wobei die Empfangssignale des Empfängers (6) den Rechenkernen (17a, 17b) zugeführt und dort redundant ausgewertet werden, und wobei die Auswerteeinheit (8) einen Watchdog-Controller (18) aufweist, mittels dessen Funktionen des Mehrkernprozessors (16) überwacht werden, **dadurch gekennzeichnet, dass** eine redundante Anordnung von sicherheitsgerichteten Schnittstellenmodulen (20a, 20b) vorhanden ist, über welche das Objektfeststellungssignal an eine externe Einheit ausgebbar ist, wobei zwei Schnittstellenmodule (20a, 20b) vorhanden sind, und wobei jeweils ein Schnittstellenmodul (20a, 20b) mit einem Rechenkern (17a, 17b) verbunden ist.

2. Optischer Sensor nach Anspruch 1, **dadurch gekennzeichnet, dass** der Watchdog-Controller (18) Tests zur Überwachung der Rechenkerne (17a, 17b) des Mehrkernprozessors (16) durchführt.

3. Optischer Sensor nach Anspruch 2, **dadurch gekennzeichnet, dass** die Tests einen Uhrenvergleich, einen Aktivitätstest, das Generieren von Aufgaben für Rechenkerne (17a, 17b) und das Kontrollieren entsprechender Aufgabenergebnisse, sowie das Überwachen von Spannungen umfassen.

4. Optischer Sensor nach einem der Ansprüche 1 bis 3, **dadurch gekennzeichnet, dass** der Watchdog-Controller (18) Selbsttests der Rechenkerne (17a, 17b) des Mehrkernprozessors (16) initiiert.

5. Optischer Sensor nach einem der Ansprüche 1 bis 4, **dadurch gekennzeichnet, dass** der Mehrkernprozessor (16) als Teil eines SoC (System On a Chip) ausgebildet ist, und dass der Watchdog-Controller (18) nicht Bestandteil des SoC ist.

6. Optischer Sensor nach Anspruch 5, **dadurch gekennzeichnet, dass** der Mehrkernprozessor (16) und der Watchdog-Controller (18) in unterschiedlichen Gehäusen (11) integriert sind.

7. Optischer Sensor nach einem der Ansprüche 1 bis 4, **dadurch gekennzeichnet, dass** der Watchdog-Controller (18) von einem Rechenkern (17a, 17b) des Mehrkernprozessors (16) gebildet ist.

8. Optischer Sensor nach einem der Ansprüche 1 bis 7, **dadurch gekennzeichnet, dass** der Watchdog-Controller (18) mit den Rechenkernen (17a, 17b) des Mehrkernprozessors (16) über ein serielles Interface (19) oder ein paralleles Interface (19) kommuniziert.

9. Optischer Sensor nach einem der Ansprüche 1 bis 8, **dadurch gekennzeichnet, dass** der Watchdog-Controller (18) die Ausgabe des Objektfeststellungssignals steuert.

10. Optischer Sensor nach Anspruch 9, **dadurch gekennzeichnet, dass** der Watchdog-Controller (18) mit einem oder beiden Rechenkernen (17a, 17b) einen logischen Kanal zur Ausgabe des Objektfeststellungssignals bildet.

11. Optischer Sensor nach einem der Ansprüche 1 bis 10, **dadurch gekennzeichnet, dass** der Mehrkernprozessor (16) mehr als zwei Rechenkerne (17a, 17b) aufweist, wobei in zwei Rechenkernen (17a, 17b) das Objektfeststellungssignal generiert wird, und wobei der oder die weiteren Rechenkerne die Kommunikation mit einer externen Einheit steuern und/oder kontrollieren.

12. Optischer Sensor nach einem der Ansprüche 1 bis 11, **dadurch gekennzeichnet, dass** die Rechenkerne (17a, 17b) in Form von CPUs oder DSPs gebildet sind.

13. Optischer Sensor nach einem der Ansprüche 1 bis 12, **dadurch gekennzeichnet, dass** dieser eine Lichtschranke oder eine Reflexions-Lichtschranke ist.

14. Optischer Sensor nach einem der Ansprüche 1 bis 13, **dadurch gekennzeichnet, dass** dieser ein Lichtvorhang (1) oder ein Reflexions-Lichtvorhang (10) ist.

15. Verfahren zum Betrieb eines optischer Sensors zur Erfassung von Objekten in einem Überwachungsbereich mit wenigstens einem Lichtstrahlen (3) emittierenden Sender (4), mit wenigstens einem Lichtstrahlen (3) empfangenden Empfänger (6), und mit einer Auswerteeinheit (8), welche ausgebildet ist, Empfangssignale des Empfängers (6) fehlersicher auszuwerten und in Abhängigkeit dieser Auswertung ein sicheres Ausgangssignal in Form eines Objektfeststellungssignals zu generieren und über eine Schnittstelle auszugeben, wobei die Auswerteeinheit (8) einen Mehrkernprozessor (16) mit wenigstens zwei Rechenkernen (17a, 17b) aufweist, wobei die Empfangssignale des Empfängers (6) den Rechenkernen (17a, 17b) zugeführt und dort redundant ausgewertet werden, und wobei die Auswerteeinheit (8) einen Watchdog-Controller (18) aufweist, mittels dessen Funktionen des Mehrkernprozessors (16) überwacht werden, **dadurch gekennzeichnet, dass** eine redundante Anordnung von sicherheitsgerichteten Schnittstellenmodulen (20a, 20b) vorhanden ist, über welche das Objektfeststellungssignal an eine externe Einheit ausgebbar ist, wobei zwei Schnittstellenmodule (20a, 20b) vorhanden sind, und wobei jeweils ein Schnittstellenmodul (20a, 20b) mit einem Rechenkern (17a, 17b) verbunden ist.

## Claims

1. An optical sensor for detecting objects within a monitoring area, comprising at least one transmitter (4) emitting light beams (3), at least one receiver (6) receiving light beams (3), and comprising an evaluation unit (8) which is designed to evaluate the receiver's (6) received signals in a fault-tolerant manner and, depending on this evaluation, to generate a reliable output signal in the form of an object detection signal and to output it via an interface, wherein the evaluation unit (8) comprises a multi-core processor (16) with at least two processing cores (17a, 17b), wherein the received signals from the receiver (6) are fed to the processing cores (17a, 17b) and evaluated redundantly there, and wherein the evaluation unit (8) comprises a watchdog controller (18) by means of which the functions of the multi-core processor (16) are monitored, **characterised in that** a redundant arrangement of safety-related interface modules (20a, 20b) is provided, via which the object detection signal can be output to an external unit, wherein two interface modules (20a, 20b) are provided, and wherein one interface module (20a, 20b) is connected to a processing core (17a, 17b).

2. An optical sensor according to claim 1, **characterised in that** the watchdog controller (18) performs tests to monitor the processing cores (17a, 17b) of the multi-core processor (16).

3. An optical sensor according to claim 2, **characterised in that** the tests comprise a clock comparison, an activity test, the generation of tasks for the processing cores (17a, 17b) and the verification of corresponding task results, as well as the monitoring of voltages.

4. An optical sensor according to any one of claims 1 to 3, **characterised in that** the watchdog controller (18) initiates self-tests of the processing cores (17a, 17b) of the multi-core processor (16).

5. An optical sensor according to any one of claims 1 to 4, **characterised in that** the multi-core processor (16) is configured as part of an SoC (System on a Chip), and **in that** the watchdog controller (18) is not part of the SoC.

6. An optical sensor according to claim 5, **characterised in that** the multi-core processor (16) and the watchdog controller (18) are integrated in different housings (11).

7. An optical sensor according to any one of claims 1 to 4, **characterised in that** the watchdog controller (18) is formed by a processing core (17a, 17b) of the multi-core processor (16).

8. An optical sensor according to any one of claims 1 to 7, **characterised in that** the watchdog controller (18) communicates with the processing cores (17a, 17b) of the multi-core processor (16) via a serial interface (19) or a parallel interface (19).

9. An optical sensor according to any one of claims 1 to 8, **characterised in that** the watchdog controller (18) controls the output of the object detection signal.

10. An optical sensor according to claim 9, **characterised in that** the watchdog controller (18) forms a logical channel with one or both processing cores (17a, 17b) for outputting the object detection signal.

11. An optical sensor according to any one of claims 1 to 10, **characterised in that** the multi-core processor (16) comprises more than two processing cores (17a, 17b), wherein the object detection signal is generated in two processing cores (17a, 17b), and wherein the one or more further processing cores control and/or monitor communication with an external unit.

12. An optical sensor according to any one of claims 1 to 11, **characterised in that** the processing cores (17a, 17b) are in the form of CPUs or DSPs.

13. An optical sensor according to any one of claims 1 to 12, **characterised in that** it is a through-beam sensor or a reflective sensor.

14. An optical sensor according to any one of claims 1 to 13, **characterised in that** it is a light curtain (1) or a reflective light curtain (10).

15. A method for operating an optical sensor for detecting objects in a monitoring area, comprising at least one transmitter (4) emitting light beams (3), at least one receiver (6) receiving light beams (3), and comprising an evaluation unit (8) which is designed to evaluate the receiver's (6) received signals in a fault-tolerant manner and, depending on this evaluation, to generate a reliable output signal in the form of an object detection signal and to output it via an interface, wherein the evaluation unit (8) comprises a multi-core processor (16) with at least two processing cores (17a, 17b), wherein the received signals from the receiver (6) are fed to the processing cores (17a, 17b) and evaluated redundantly there, and wherein the evaluation unit (8) comprises a watchdog controller (18) by means of which the functions of the multi-core processor (16) are monitored, **characterised in that** a redundant arrangement of safety-related interface modules (20a, 20b) is provided, via which the object detection signal can be output to an external unit, wherein two interface modules (20a, 20b) are provided, and wherein one interface module (20a, 20b) is connected to a processing core (17a, 17b).

## Revendications

1. Capteur optique destiné à la détection d'objets dans une zone de surveillance, comprenant au moins un émetteur (4) émettant des faisceaux lumineux (3), au moins un récepteur (6) recevant des faisceaux lumineux (3), et d'une unité d'évaluation (8) qui est conçue pour évaluer de manière fiable les signaux de réception du récepteur (6) et, en fonction de cette évaluation, pour générer un signal de sortie fiable sous forme d'un signal de détection d'objet et pour le transmettre via une interface, l'unité d'évaluation (8) comportant un processeur multicœur (16) avec au moins deux cœurs de calcul (17a, 17b), les signaux de réception du récepteur (6) étant transmis aux cœurs de calcul (17a, 17b) et y étant évalués de manière redondante, et l'unité d'évaluation (8) comportant un contrôleur de surveillance (18) au moyen duquel les fonctions du processeur multi-cœur (16) sont surveillées, **caractérisé en ce qu'**il existe un agencement redondant de modules d'interface de sécurité (20a, 20b), par l'intermédiaire desquels le signal de détection d'objet peut être transmis à une unité externe, deux modules d'interface (20a, 20b) étant présents, et un module d'interface (20a, 20b) est relié à un cœur de calcul (17a, 17b).

2. Capteur optique selon la revendication 1, **caractérisé en ce que** le contrôleur de surveillance (18) effectue des tests pour surveiller les cœurs de calcul (17a, 17b) du processeur multicœur (16).

3. Capteur optique selon la revendication 2, **caractérisé en ce que** les tests comprennent une comparaison d'horloge, un test d'activité, la génération de tâches pour les cœurs de calcul (17a, 17b) et la vérification des résultats correspondants de ces tâches, ainsi que la surveillance des tensions.

4. Capteur optique selon l'une des revendications 1 à 3, **caractérisé en ce que** le contrôleur de surveillance (18) lance des autotests des cœurs de calcul (17a, 17b) du processeur multicœur (16).

5. Capteur optique selon l'une des revendications 1 à 4, **caractérisé en ce que** le processeur multicœur (16) est conçu comme faisant partie d'un SoC (System On a Chip), et **en ce que** le contrôleur de surveillance (18) ne fait pas partie du SoC.

6. Capteur optique selon la revendication 5, **caractérisé en ce que** le processeur multicœur (16) et le contrôleur de surveillance (18) sont intégrés dans des boîtiers (11) distincts.

7. Capteur optique selon l'une des revendications 1 à 4, **caractérisé en ce que** le contrôleur de surveillance (18) est constitué par un cœur de calcul (17a, 17b) du processeur multicœur (16).

8. Capteur optique selon l'une des revendications 1 à 7, **caractérisé en ce que** le contrôleur de surveillance (18) communique avec les cœurs de calcul (17a, 17b) du processeur multicœur (16) via une interface série (19) ou une interface parallèle (19).

9. Capteur optique selon l'une des revendications 1 à 8, **caractérisé en ce que** le contrôleur de surveillance (18) commande l'émission du signal de détection d'objet.

10. Capteur optique selon la revendication 9, **caractérisé en ce que** le contrôleur de surveillance (18) forme avec l'un ou les deux cœurs de calcul (17a, 17b) un canal logique pour l'émission du signal de détection d'objet.

11. Capteur optique selon l'une des revendications 1 à 10, **caractérisé en ce que** le processeur multicœur (16) comporte plus de deux cœurs de calcul (17a, 17b), le signal de détection d'objet étant généré dans deux cœurs de calcul (17a, 17b), et le ou les autres cœurs de calcul commandant et/ou contrôlant la communication avec une unité externe.

12. Capteur optique selon l'une des revendications 1 à 11, **caractérisé en ce que** les cœurs de calcul (17a, 17b) se présentent sous la forme de CPU ou de DSP.

13. Capteur optique selon l'une des revendications 1 à 12, **caractérisé en ce qu'**il s'agit d'une barrière lumineuse ou d'une barrière lumineuse à réflexion.

14. Capteur optique selon l'une des revendications 1 à 13, **caractérisé en ce qu'**il s'agit d'un rideau lumineux (1) ou d'un rideau lumineux à réflexion (10).

15. Procédé de fonctionnement d'un capteur optique destiné à la détection d'objets dans une zone de surveillance comprenant au moins un émetteur (4) émettant des faisceaux lumineux (3), au moins un récepteur (6) recevant des faisceaux lumineux (3), et d'une unité d'évaluation (8) qui est conçue pour évaluer de manière fiable les signaux de réception du récepteur (6) et, en fonction de cette évaluation, pour générer un signal de sortie fiable sous la forme d'un signal de détection d'objet et pour le transmettre via une interface, l'unité d'évaluation (8) comportant un processeur multicœur (16) avec au moins deux cœurs de calcul (17a, 17b), les signaux de réception du récepteur (6) étant transmis aux cœurs de calcul (17a, 17b) et y étant évalués de manière redondante, et l'unité d'évaluation (8) comportant un contrôleur de surveillance (18) au moyen duquel les fonctions du processeur multicœur (16) sont surveillées, **caractérisé en ce qu'**il existe un agencement redondant de modules d'interface de sécurité (20a, 20b), par l'intermédiaire desquels le signal de détection d'objet peut être transmis à une unité externe, deux modules d'interface (20a, 20b) étant présents, et un module d'interface (20a, 20b) est relié à un cœur de calcul (17a, 17b).
